# NEW EUROPEAN PATENT SPECIFICATION

(11) **EP 1 926 809 B2**
(45) Date of publication and mention of the opposition decision: **28.08.2019**
(45) Mention of the grant of the patent: 17.03.2010
(21) Application number: 06777186.5
(22) Date of filing: 08.09.2006
(51) Int. Cl.: C11D 3/40, C11D 3/37, C09B 67/00

(54) **COMPOSITION OF ENHANCED STABILITY AND A PROCESS FOR MAKING SUCH A COMPOSITION**
ZUSAMMENSETZUNG MIT VERBESSERTER STABILITÄT UND VERFAHREN ZU IHRER HERSTELLUNG
COMPOSITION PRESENTANT UNE STABILITE AMELIOREE ET PROCEDE DE FABRICATION D UNE TELLE COMPOSITION

(30) Priority: 22.09.2005 GB 0519347
(43) Date of publication of application: 04.06.2008
(73) Proprietor: Unilever PLC, London EC4Y 0DY (GB); Unilever N.V., 3013 AL Rotterdam (NL)
(72) Inventor: BATCHELOR, Stephen, Norman, Bebington, Wirral Merseyside CH63 3JW (GB); DOMBURG, Bastiaan, NL-3133 At Vlaardingen (NL); NEWMAN, Mark, Nicholas, Bebington, Wirral Merseyside CH63 3JW (GB); RIGBY, Dawn, Bebington, Wirral Merseyside CH63 3JW (GB)
(74) Representative: Brooijmans, Rob Josephina Wilhelmus
(86) International application number: PCT/EP2006/008848
(87) International publication number: WO 2007/039042

(56) References cited:
- EP-A- 1 577 374
- EP-A1- 1 577 374
- EP-A2- 1 113 068
- EP-A2- 1 113 068
- WO-A-2006/053598
- WO-A1-2006/053598
- US-A- 1 925 843
- US-A- 1 925 843
- US-A- 4 721 633
- US-A- 4 721 633

## Description

### FIELD OF INVENTION

This invention relates to the stability of acid and direct dyes.

### BACKGROUND OF INVENTION

We have recently found that some dyes may be incorporated into laundry detergent at low levels and provide a shading benefit to textiles. We have however found that some of these dyes are not stable in granular detergent compositions.

The shelf life of a product may be regarded as the period of time over which the product may be stored whilst retaining its required quality. A satisfactory shelf life is in many instances a crucial factor for the success of a commercial product. A product with a short shelf life generally dictates that the product is made in small batches and is rapidly sold to the consumer. It is also a concern to the owners of a brand with a short shelf life that the consumer uses the product within the shelf life otherwise the consumer may be inclined to change to a similar product of another brand. In contrast a similar product with a long shelf life may be made in larger batches, held as stock for a longer period of time and the period of time that a consumer stores the product is not of a great concern to the owners of a particular brand.

It is an object of the present invention to provide a granular composition comprising a dye that has improved storage properties.

### SUMARY OF INVENTION

We have found that the dyes are unstable even when segregated from the bulk of a basic granulated detergent powder. We have found that the presence of an acidic component in the dye composition containing the dye serves to enhance the stability of the dye in a basic laundry detergent powder.

In one aspect the present invention comprises a granule, for use in the preparation of a basic laundry detergent shading composition, said granule having improved storage properties comprising:
a dye selected from the group consisting of acid dyes, direct dyes, basic dyes, solvent dyes, hydrolysed reactive dyes, reactive dyes and disperse dyes and having a dye chromophore type of diarylmethane,
triarylmethane, diazines, oxazines, or thiazines and, a component selected from the group consisting of: a cogranulent, a binder and a coating,
**characterised in that** the component is an acidic component, wherein buffer capacity wherein when 1.00 gm of the granules are dissolved in 50 ml of demineralised water to provide an acidic solution at least 10 ml of a 0.01 M solution of sodium hydroxide is required to bring the pH of the acidic solution to 9.

A unit dose as used herein is a particular amount of the bleaching composition used for a type of wash. The unit dose may be in the form of a defined volume of powder, granules or tablet or unit dose detergent liquid.

### DETAILED DESCRIPTION OF THE INVENTION

### The Acidic Component

The acidic component according to the present invention may be water-soluble acidic polymer. The polymer may be used in the compositions according to the present invention to coat, bind or act as cogranulent to the dye. In a preferred embodiment of the present invention, the dye, with or without cogranulant, is agglomerated, preferably with a water-soluble acidic polymer

In one embodiment of the invention the binder material and the coating material are different water-soluble acidic polymers, but in another, preferred embodiment of the present invention, the binder material and the coating material are the same water-soluble acidic polymer.

In determining the scope of the present invention one skilled in the art will appreciate that a coating agent, a binder and a cogranulent may be regarded as providing overlapping functions. Nevertheless, a single function is all that is required to provide the advantage of the present invention. Obviously, if the acidic component is applied so that all three roles are fulfilled a greater stability may be conferred.

Suitable water-soluble monomeric or oligomeric carboxylate builders include lactic acid, glycolic acid and ether derivatives thereof as disclosed in Belgian Patent Nos. 831,368, 821,369 and 821,370. Polycarboxylates containing two carboxy groups include the water-soluble salts of succinic acid, malonic acid, (ethylenedioxy) diacetic acid, maleic acid, diglycolic acid, tartaric acid, tartronic acid and fumaric acid, as well as the ether carboxylates described in German Offenlegenschrift 2,446,686, and 2,446,687 and U.S. Patent No. 3,935,257 and the sulfinyl carboxylates described in Belgian Patent No. 840,623. Polycarboxylates containing three carboxy groups include, in particular, water-soluble citrates, aconitates and citraconates as well as succinate derivatives such as the carboxymethyloxysuccinates described in British Patent No. 1,379,241, lactoxysuccinates described in British Patent No. 1,389,732, and aminosuccinates described in Netherlands Application 7205873, and the oxypolycarboxylate materials such is 2-oxa-1,1,3-propane tricarboxylates described in British Patent No. 1,387,447.

Polycarboxylates containing four carboxy groups include oxydisuccinates disclosed in British Patent No. 1,261,829, 1,1,2,2-ethane tetracarboxylates, 1,1,3,3-propane tetracarboxylates and 1,1,2,3-propane tetracarboxylates. Polycarboxylates containing sulfo substituents include the sulfosuccinate derivatives disclosed in British Patent Nos. 1,398,421 and 1,398,422 and in U.S. Patent No. 3,936,448, and the sulfonated pyrolysed citrates described in British Patent No. 1,439,000.

Another preferred polycarboxylate builder is ethylenediamine-N,N'-disuccinic acid (EDDS) or the alkali metal, alkaline earth metal, ammonium, or substituted ammonium salts thereof, or mixtures thereof. Preferred EDDS compounds are the free acid form and the sodium or magnesium salt thereof. Examples of such preferred sodium salts of EDDS include NaEDDS and Na2EDDS.

Examples of such other magnesium salts of EDDS include MgEDDS and Mg2EDDS. The magnesium salts are the most preferred for inclusion in compositions in accordance with the invention.

The structure of the acid form of EDDS is as follows: 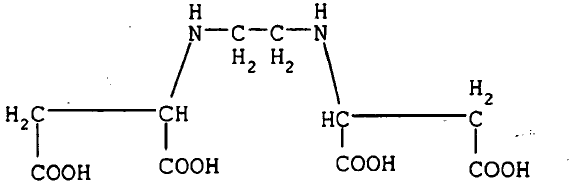 EDDS can be synthesised, for example, from readily available, inexpensive starting material such as maleic anhydride and ethylene diamine. A more complete disclosure of methods for synthesising EDDS from commercially available starting materials can be found in US Patent 3,158,635, Kezerian and Ramsay, issued November 24, 1964.

The synthesis of EDDS from maleic anhydride and ethylene diamine yields a mixture of three optical isomers, [R,R], [S,S), and (S,R], due to the two asymmetric carbon atoms. The biodegradation of EDDS is optical isomerspecific, with the [S,S] isomer degrading most rapidly and extensively, and for this reason the (S,S) isomer is most preferred for inclusion in the compositions of the invention.

The [S,S] isomer of EDDS can be synthesised by heating L-aspartic acid and 1,2-dibromoethane in the presence of sodiun hydroxide. A more complete disclosure of the reaction of L-aspartic acid with 1,2-dibromoethane to form the (S,S) isomer of EDDS can be found in Neal and Rose, Stereospecific Ligands and Their Complexes of Ehtylenediaminediscuccinic Acid, Inorganic Chemistry, Vol 7 (1968), pp. 2405-2412.

Alicyclic and heterocyclic polycarboxylates include cyclopentane-cis,cis,cis-tetracarboxylates, cyclopentadienide pentacarboxylates, 2,3,4,5-tetrahydrofuran - cis, cis, cis-tetracarboxylates, 2,5-tetrahydrofuran - cis - dicarboxylates, 2,2,5,5-tetrahydrofuran - tetracarboxylates, 1,2,3,4,5,6-hexane - hexacarboxylates and carboxymethyl derivatives of polyhydric alcohols such as sorbitol, mannitol and xylitol. Aromatic polycarboxylates include mellitic acid, pyromellitic acid and the phthalic acid derivatives disclosed in British Patent No. 1,425,343. Of the above, the preferred polycarboxylates are hydroxycarboxylates containing up to three carboxy groups per molecule, more particularly citrates.

The parent acids of the monomeric or oligomeric polycarboxylate chelating agents or mixtures thereof with their salts, e.g. citric acid or citrate/citric acid mixtures are also contemplated as components of builder systems of detergent compositions in accordance with the present invention.

Other suitable water soluble organic salts are the homo- or co-polymeric polycarboxylic acids or their salts in which the polycarboxylic acid comprises at least two carboxyl radicals separated from each other by not more than two carbon atoms. Polymers of the latter type are disclosed in GB-A-1,596,756. Examples of such salts are polyacrylates of MWt 2000 to 5000 and their copolymers with maleic anhydride, such copolymers having a molecular weight of from 20,000 to 70,000, especially about 40,000.

Such builder polymeric materials may be identical to the polymeric materials as binder materials and coating materials, as described hereinabove. These materials are normally used at levels of from 0.5% to 10% by weight more preferably from 0.75% to 8%, most preferably from 1% to 6% by weight of the composition.

Organic phosphonates and amino alkylene poly (alkylene phosphonates) include alkali metal ethane 1-hydroxy diphosphonates, nitrilo trimethylene phosphonates, ethylene diamine tetra methylene phosphonates and diethylene 1,12 triamine pentamethylenephosphonates, although these materials are less preferred where the minimisation of phosphorus compounds in the compositions is desired.

Suitable polymers for use herein are water-soluble. By water-soluble, it is meant herein that the polymers have a solubility greater than 5 g/l at 20 °C.

Suitable polymers for use herein are acidic. By acidic, it is meant herein that a 1% solution of said polymers has a pH of less than 7, preferably less than 5.5.

Suitable polymers for use herein have a molecular weight in the range of from 1000 to 280,000, preferably from 1500 to 150,000, preferably, suitable polymers for use herein have a melting point above 30 °C.

Suitable polymers which meet the above criteria and are therefore particularly useful in the present invention, include those having the following empirical formula I 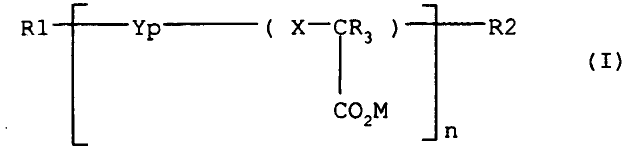 wherein X is 0 or CH2; Y is a comonomer or comonomer mixture; R1 and R2 are bleach-stable polymer-end groups; R3 is H, OH or C1-4 alkyl; M is H, and mixtures thereof with alkali metal, alkaline earth metal, ammonium or substituted ammonium; p is from 0 to 2; and n is at least 10, and mixtures thereof. The proportion of M being H in such polymers must be such as to ensure that the polymer is sufficiently acidic to meet the acidity criteria as hereinbefore defined.

Polymers according to formula I are known in the field of laundry detergents, and are typically used as chelating agents, as for instance in GB-A-1,597,756. Preferred polycarboxylate polymers fall into several categories. A first category belongs to the class of copolymeric polycarboxylate polymers which, formally at least, are formed from an unsaturated polycarboxylic acid such as maleic acid, citraconic acid, itaconic acid and mesaconic acid as first monomer, and an unsaturated monocarboxylic acid such as acrylic acid or an alpha -C1-C4 alkyl acrylic acid as second monomer. Referring to formula I, therefore, preferred polycarboxylate polymers of this type are those in which X is CHO, R3 is H or C1-4 alkyl, especially methyl, p is from about 0.1 to about 1.9, preferably from about 0.2 to about 1.5, n averages from about 10 to about 1500, preferably from about 50 to about 1000, more preferably from 100 to 800, especially from 120 to 400 and Y comprises monomer units of formula II

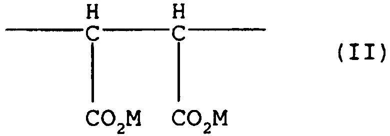

Such polymers are available from BASF under the trade name Sokalan® CP5 (neutralised form) and Sokalan® CP45 (acidic form), Sokalan® CP 13 (acidic form).

A second category belongs to the class of polycarboxylate polymers in which referring to formula I, X is CH2, R3 is OH, p is from 0 to 0.1, preferably 0 and n averages from about 50 to about 1500, preferably from about 100 to 1000.

Y, if present, can be a polycarboxylic acid such as II above, or an ethylene oxide moiety.

A third category belongs to the class of acetal polycarboxylate polymers in which, referring to formula I, X is (OR4)2, where R4 is C1-C4 alkyl, R3 is H, p is from 0 to 0.1, preferably 0 and n averages from 10 to 500. If present, Y again can be a polycarboxylic acid such as II above or an ethyleneoxide moiety.

A fourth category belongs to the class of polycarboxylate polymers in which referring to formula I, X is CH2, R3 is H or C1-4 alkyl, p is 0 and n averages from about 10 to 1500, preferably from about 500 to 1000.

A fifth category of polycarboxylate polymers has the formula I in which X is CH2, R3 is H or C1-4 alkyl, especially methyl, p is from 0.01 to 0.09, preferably from 0.02 to 0.06, n averages from about 10 to about 1500, preferably from about 15 to about 300 and Y is a polycarboxylic acid formed from maleic acid, citraconic acid, mitaconic acid or mesaconic acid, highly preferred being maleic acid-derived comonomers of formula II above.

Suitable polymer end groups in formula I suitably include alkyl groups, oxyalkyl groups and alkyl carboxylic acid groups and salts and esters thereof.

In formula I above, M is H or mixtures thereof with alkali metal, alkaline earth metal, ammonium or substituted ammonium. The proportion of M which is H is such as to ensure that the polymer meets the pH criteria described herein above.

In the above, n, the degree of polymerization of the polymer can be determined from the weight average polymer molecular weight by dividing the latter by the average monomer molecular weight. Thus, for a maleic-acrylic copolymer having a weight average molecular weight of 15,500 and comprising 30 mole % of maleic acid derived units, n is 182 (i.e. 15,00/(116 x 0.3 + 72 x 0.7).

In case of doubt, weight-average polymer molecular weights can be determined herein by gel permeation chromotography using Water [mu] Porasil (RTM) GPC 60 A2 and (mu) Bondagel (RTM) E-125, E-500 and E-1000 in series, temperature-controlled columns at 40 °C against sodium polystyrene sulphonate polymer standards, available from Polymer Laboratories Ltd., Shropshire, UK, the polymer standards being 0.15M sodium dihydrogen phosphate and 0.02M tetramethyl ammonium hydroxide at pH 7.0 in 80/20 water/acetonitrile.

Mixtures of polycarboxylate polymers are also suitable herein, especially mixtures comprising a high molecular weight component having an n value of at least 100, preferably at least 120, and a low molecular weight component having an n value of less than 100, preferably from 10 to 90, more preferably from 20 to 80. Such mixtures are optimum from the viewpoint of providing excellent bleach stability and anti-incrustation performance in the context of a zerophosphate detergent formula.

In mixtures of this type, the weight ratio of high molecular weight component to low molecular weight component is generally at least hi, preferably from about 1:1 to about 20:1, more preferably from about 1.5:1 to about 10.1, especially from about 2:1 to about 8:1.

Preferred polycarboxylate polymers of the low molecular weight type are polycarboxylate polymers of the fourth category (homopolyacrylate polymers) listed above.

Of all the above, highly preferred polycarboxylate polymers herein are those of the first category in which n averages from 100 to 800, preferably from 120 to 400 and mixtures thereof with polycarboxylate polymers of the fourth category in which n averages from 10 to 90, preferably from 20 to 80.

Other suitable polymers for use herein include polymers derived from amino acids such as polyglutamine acid, as disclosed in co-pending application GB 91-20653.2, and polyaspartic acid, as disclosed in EP 305 282, and
EP 351 629.

Alternatively, the binder component may be a component together with an acid e.g., Polyvinyl alcohol and a liquid acid. Fatty acids have also been found to be suitable.

Preferably, the granule contains between 2 to 20 wt% of a water soluble acidic polymer.

### Granule/Particle witch Enhanced Dye Stability

It is essential that the dye is close to or in contact with an acidic material. In this regard, the dye and acidic material are present as a single granule or particle. The dye is provided may be provided in a solid form or in pre-solubilized form, for example solubilized in a non-ionic surfactant.

It is preferred that the granule has a buffer capacity of at least 5. The buffer capacity of at least 10 is even more beneficial, preferably at least 30, most preferably at least 50, and even more preferably at least 70. An upper buffer capacity of 200 may be ascribed but greater buffer capacities may be used. The buffer capacity is defined the number of ml of a 0.01 M solution of sodium hydroxide required to bring 50 ml a solution of demineralised water containing 1.00 gm of the granules/particles to a pH of 9.

The dye may be pre-mixed with a water-soluble salt to form a first granule that is coated with an acidic material or mixed therewith. Insoluble neutral materials may also be used to form the pregranule. It is also within the scope to use an acidic insoluble material such as a clay or a neutral insoluble material. Generally, the dye is present in the first granule in the range 1 to 10 %, preferably 1 to 5 %, and most preferably 1 to 2%. Preferred water-soluble salts are sodium sulphate and sodium chloride, most preferred is sodium sulphate.

The size of dye containing granule may be in the range of 50 to 3000 µm. It is most preferred that the granule has a particle size in the range of 100 to 2000 µm, most preferably 180 µm to 1000 µm. The size as given is the maximum length in any one direction of the granule such that the granule passes through a standard sieve of the requisite size.

The level of dye in the individual granules may be in the range from 0.05 to 50 wt %. It is most preferred that the level of dye is from in the range of 0.1 to 20 wt %, most preferably 0.5 to 10 wt %.

### Method of Coating with the Acidic Binder

The coating of the co-agglomerated material with the coating material can be carried out in several ways and the process itself is not critical to the present invention.

The coating material may be sprayed on as a molten material or as a solution or dispersion in a solvent/carrier liquid that is subsequently removed by evaporation.

The coating material can also be applied as a powder coating e.g. by electrostatic techniques although this is less preferred as the adherence of powdered coating material is more difficult to achieve and can be more expensive.

Molten coating is a preferred technique for coating materials of Mpt < 80 °C but is less convenient for higher Melting Point acids (i.e. > 100 °C). For coating materials of Mpt > 80 °C, spray on as a solution or dispersion is preferred. Organic solvents such as ethyl and isopropyl alcohol can be used to form the solutions or dispersions, although this will necessitate a solvent recovery stage in order to make their use economic. However, the use of organic solvents also gives rise to safety problems such as flammability and operator safety and thus aqueous solutions or dispersions are preferred.

Aqueous solutions are particularly advantageous as the coating materials herein have a high aqueous solubility, provided the solution has a sufficiently low viscosity to enable it to be handled. Preferably a concentration of at least 25% by weight of the coating material in the solvent is used in order to reduce the drying/evaporation load after surface treatment has taken place. The treatment apparatus can be any of those normally used for this purpose, such as inclined rotary pans, rotary drums, high shear granulation and fluidised beds.

All of the ingredients of the final composition may be mixed or blended in any suitable piece of equipment, such as a rotating drum. Liquid ingredients such as nonionic surfactant and perfume may be sprayed on to the surface of one or more of the constituent particles.

Appropriate choice of constituent particles is required in order to ensure that the finished composition has a bulk density of at least 350 g/l, preferably 750-1100 g/l.

### Dye

The acidic granule comprises one or more dyes.

Of dyes it is preferred that the dyes have a blue and/or violet shade and are photo stable. A blue and/or violet shade means that the peak absorption frequency of the dye absorbed on the cloth lies within the range of from 540nm to 650nm, preferably from 570nm to 630nm. It is also possible that the same effect can be achieved by a combination of dyes, each of which not necessarily having a peak absorption within these preferred ranges but together produce an effect on the human eye which is equivalent to a single dye with a peak absorption within one of the preferred ranges.

The dyes of the present invention are preferably photostable. A photostable dye is a dye which does not quickly photodegrade in the presence of natural summer sunlight. A photostable dye in the current context may be defined as a dye which, when on cotton, does not degrade by more than 10% when subjected to 1 hour of irradiation by simulated Florida sunlight (42 W/m² in UV and 343 W/m² in visible).

It is preferred that the dye has a high extinction coefficient, so that a small amount of dye gives a large amount of colour. Preferably the extinction coefficient at the maximum absorption of the dye is greater than 1000 mol⁻¹ L cm⁻¹, preferably greater than 10,000 mol⁻¹ L cm⁻¹, more preferably greater than 50,000 mol⁻¹ L cm⁻¹.

The dyes are preferably substantive to a degree such that after 10 treatments, preferably after 5 treatments, applied to a substantially white cotton fabric initially free of the dye, the concentration of the dye in the fabric approaches a substantially constant value.

It is preferred that the dye has a substantivity to cotton in a standard test of greater than 7%, preferably from 8 to 80%, more preferably from 10 to 60%, most preferably from 15 to 40%, wherein the standard test is with a dye loading such that the solution has an optical density of approximately 1 (5 cm pathlength) at the maximum absorption of the dye in the visible wavelengths (400-700nm), a surfactant concentration of 0.3 g/L and under wash conditions of a liquor to cloth ratio of 45:1, temperature of 20°C, soak times of 45 minutes, agitation time of 10 minutes.

Suitable dyes for acidic protection may be selected from the group consisting of acid dyes, direct dyes, basic dyes, solvent dyes, hydrolysed reactive dyes, reactive dyes and disperse dyes. Preferably the dye is selected from substantive direct and acid dyes.

Dye chromophore type within the above suitable dyes which are particularly sensitive to high pH are diarylmethane, triarylmethane, diazines, oxazines, and thiazines. The present invention is particularly suitable to stabilising these chromophore classes in basic formulation. Examples of these dyes which are preferred are: 1) acid violet 15, 16, 17, 19, 21, 23, 24, 25, 38, 50, 72, and 3) basic violet 1, 2, 3, 4, 5, 6, 7, 9, 13, 14, 15, 16, 17, 23, 27, 40, 43, 45, and 47.

### The Detergent Composition

The dye may be used in a detergent composition specifically suited for stain bleaching purposes, and this constitutes a second aspect of the invention. To that extent, the composition comprises a surfactant and optionally other conventional detergent ingredients. The invention in its second aspect provides an enzymatic detergent composition which comprises from 0.1 - 50 % by weight, based on the total detergent composition, of one or more surfactants. This surfactant system may in turn comprise 0 - 95 % by weight of one or more anionic surfactants and 5 to 100 % by weight of one or more nonionic surfactants. The surfactant system may additionally contain amphoteric or zwitterionic detergent compounds, but this in not normally desired owing to their relatively high cost. The enzymatic detergent composition according to the invention will generally be used as a dilution in water of about 0.05 to 2%.

In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981.

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with propylene oxide. Specific nonionic detergent compounds are C₆-C₂₂ alkyl phenol-ethylene oxide condensates, generally 5 to 25 EO, i.e. 5 to 25 units of ethylene oxide per molecule, and the condensation products of aliphatic C₈-C₁₈ primary or secondary linear or branched alcohols with ethylene oxide, generally 5 to 40 EO.

Suitable anionic detergent compounds which may be used are usually water-soluble alkali metal salts of organic sulphates and sulphonates having alkyl radicals containing from about 8 to about 22 carbon atoms, the term alkyl being used to include the alkyl portion of higher acyl radicals.

Examples of suitable synthetic anionic detergent compounds are sodium and potassium alkyl sulphates, especially those obtained by sulphating higher C₈-C₁₈ alcohols, produced for example from tallow or coconut oil, sodium and potassium alkyl C₉-C₂₀ benzene sulphonates, particularly sodium linear secondary alkyl C₁₀-C₁₅ benzene sulphonates; and sodium alkyl glyceryl ether sulphates, especially those ethers of the higher alcohols derived from tallow or coconut oil and synthetic alcohols derived from petroleum. The preferred anionic detergent compounds are sodium C₁₁-C₁₅ alkyl benzene sulphonates and sodium C₁₂-C₁₈ alkyl sulphates. Also applicable are surfactants such as those described in EP-A-328 177 (Unilever), which show resistance to salting-out, the alkyl polyglycoside surfactants described in EP-A-070 074, and alkyl monoglycosides.

Preferred surfactant systems are mixtures of anionic with nonionic detergent active materials, in particular the groups and examples of anionic and nonionic surfactants pointed out in EP-A-346 995 (Unilever). Especially preferred is surfactant system that is a mixture of an alkali metal salt of a C₁₆-C₁₈ primary alcohol sulphate together with a C₁₂-C₁₅ primary alcohol 3-7 EO ethoxylate.

The nonionic detergent is preferably present in amounts greater than 10%, e.g. 25-90% by weight of the surfactant system. Anionic surfactants can be present for example in amounts in the range from about 5% to about 40% by weight of the surfactant system.

One skilled in the art will appreciate that some adventitious peroxyl species may be in the composition nevertheless it is most preferred that the bleaching composition of the present invention has less that 1%, preferably less than 0.1%, most preferably less than 0.01%, of a peroxyl species present.

The detergent composition may take any suitable physical form, such as a powder, granular composition, tablets, a paste or an anhydrous gel.

The composition may contain additional enzymes as found in WO 01/00768 A1 page 15, line 25 to page19, line 29, the contents of which are herein incorporated by reference. Builders, polymers and other enzymes as optional ingredients may also be present as found in WO0060045.

Suitable detergency builders as optional ingredients may also be present as found in WO0034427.

The detergent composition is basic such that a unit dose provides a pH to an aqueous wash volume above pH 7. Preferably a unit dose provides alkalinity in the pH range 8 to 11 when it dissolves in an aqueous wash volume. Alkalinity (basisity) may be provided by sodium carbonate, sodium tripolyphosphate, sodium perborate, sodium percarbonate, silicates. Preferably the laundry detergent composition comprises sodium carbonate.

The laundry detergent shading composition detergent composition preferably comprises from 0.0001 to 0.1 wt% of the dye or mixture thereof, preferably from 0.0005 to 0.05 wt%, more preferably from 0.001 to 0.01 wt%, most preferably from 0.002 to 0.008 wt%.

### Experimental

### Preparation of the granules

Non-acidic catalyst granules were prepared by mixing Dye (2.5 g) with sodium sulphate (480.0g) in a laboratory scale high shear mixer/granulator followed by addition of 17.5g of 30EO nonionic (Lutensol AO30) melt at a temperature of 80°C. Mixing was continued for 3 to 5 minutes until satisfactory granules where obtained.

Acidic dye granules were prepared by mixing Dye acid violet 17 (2.5g) with a 25% Sokalan CP13S solution (250g) under constant stirring for 30 minutes. The dye-nonionic mixture is sprayed into a laboratory scale fluid bed mixer at a rate of 5ml/minute onto sodium sulphate (437.5g) at an air inlet temperature of about 80°C. When all of the dye mixture has been added fluidisation is continued for a further 5 minutes.

The acidic dye granules and non-acidic dye granules (9.0g) were individually processed by mixing 150g detergent base powder (see below) and stored in pre-fabricated cartons (unvarnished) 37°C and at a relative humidity of (RH) 70%.
At periodic intervals samples were removed and their dye content determined.

**Base Detergent**

| **Component** | **Powder(%)** |
|---|---|
| | |
| NaLAS | 18.0900 |
| Silicate | 7.5978 |
| STPP | 9.9238 |
| Sulphate Added | 42.2300 |
| Carbonate | 13.1697 |
| SCMC | 0.3100 |
| CBS slurry | 0.1034 |
| Perborate monohydrate | 0.8270 |
| Dye | 0.0147 |
| Savinase 12T | 0.2067 |
| Impurities | 1.6872 |
| Water | 5.8384 |
| Total | 100.0000 |

### Measurement of the Dye Level in the Granule

The level of dye in the granules was measured by the UV absorbance following the following protocol. Remove the full contents of the pack and split the sample into 20g portions. Fill a bucket with 5 litres of demin water. Dose 20g of the powder under test in the water and stir for 1 minute or until no obvious residues remains. Take a 100ml sample of the wash liquor. Filter the wash liquor through a No.1 filter paper. Record the spectrum of the wash liquor using the HP8453 UV-visible spectrophotometer with the 5cm cell. Compare the spectra of the wash liquors of the freshly prepared powder + dye and the stored sample. The difference in peak absorbance at 600nm of the dye was measured as a function of time on store.

### Procedure for the Buffer Capacity Measurement

Granules (1.00g) were added to 50ml of demineralized water in a 100ml beaker and continually stirred with a magnetic stirrer. The contents of the beaker are brought into contact with a pH probe which has been calibrated over the pH range 4 to 10. The contents of the beaker are then manually titrated with 0.01M NaOH and the pH of the contents recorded as a function of added NaOH. The volume of 0.01M NaOH required to be added to the contents of the beaker such the contents reach a pH of 9 is defined as the buffer capacity.

**Table 1**

| Time (days) | % Dye-Acidic granule | % Dye-Neutral granule |
|---|---|---|
| 0 | 100 | 100 |
| 6 | 97 | 54 |
| 18 | 93 | 31 |
| 30 | 85 | 19 |
| 34 | 84 | 13 |
| 45 | 75 | 10 |

The results in Table 1 show a substantial advantage provided by the present invention to the stability of the dye in the composition by use of an acidic component.

**Table 2**

| Buffer Capacity Results | |
|---|---|
| | Volume of 0.01M NaOH to reach pH9 (ml) |
| Dye-Acidic granule | 87.0 |
| Dye-Neutral granule | 0.95 |

### Example

Instability to high pH (>10) has been found to be common among many classes and types of dye.

To illustrate this aqueous solutions of 4 dyes were made at pH=7 and pH=11 (using a hydrion TM buffer)
The dyes were:
a) Acid violet 17 - a triphenyl methane dye with 2 sulphonate groups
b) Basic violet 2 - a triphenyl methane dye with no sulphonate groups and
c) Acid blue 29 - a bisazo dye, and
d) Basic blue 9 - an azine dye.

The solutions were such that the optical density at the lambda max in the Visible absorption spectrum was approximately 1 (1 cm path length).

For the acid dyes the optical absorption was measured initially then after 24 hours. In this time the absorbance of acid violet 17 had dropped by 60% and acid blue 29 by 50% in the pH=11 solutions. No change was observed at pH 7. Thus the dyes are unstable to high pH.

For the basic dyes the optical absorption was measured initially then after 5 hours. In this time the absorbance of basic violet 2 had dropped by 100% and basic blue 9 by 55% in the pH=11 solutions. No change was observed at pH 7. Thus the dyes are unstable to high pH.

## Claims

1. A granule, for use in the preparation of a basic laundry detergent shading composition, said granule having improved Storage properties comprising:
a dye selected from the group consisting of acid dyes, direct dyes, basic dyes, solvent dyes, hydrolysed reactive dyes, reactive dyes and disperse dyes and having a dye chromophore type of diarylmethane, triarylmethane, diazines, oxazines, or thiazines
and, a component selected from the group consisting of:
a cogranulent, a binder and a coating,
**characterised in that** the component is an acidic component, wherein buffer capacity wherein when 1.00 gm of the granules are dissolved in 50 ml of demineralised water to provide an acidic solution at least 10 ml of a 0.01 M solution of sodium hydroxide is required to bring the pH of the acidic solution to 9.

2. A granule according to claim 1, wherein the dye selected from: an acid dye and a direct dye.

3. A granule according to claim 1 or 2, wherein the dye Is in the form of pregranules comprising the dye and a neutral water soluble material.

4. A granule according to any preceding claim, wherein the acidic component is a water soluble acidic polymer, said polymer having a water solubility greater than 5g/l at 20 °C, a molecular weight of from 1000 to 250000, and wherein a 1% solution of said polymer has a pH of less than 7.

5. A granule according to claim 4, wherein the water soluble acidic polymer is a polymer formed from the polymerisation of an unsaturated compound containing a carboxylic acid.

6. A granule according to claim 5, wherein the water soluble acidic polymer is a copolymer of acrylic acid and maleic acid.

7. A granule according to any one of claim 1 to 6, wherein the dye is acid violet 15, 16, 17, 19, 21, 23, 24, 25, 38,50, 72, and basic violet 1, 2, 3, 4, 5, 6, 7, 9, 13, 14, 15, 16, 17, 23, 27, 40, 43, 45, and 47.

8. A granule according to any one of claim 1 to 6, wherein the dye is an acid dye selected from the group consisting of: acid violet 17, acid blue 3, acid blue 9, acid blue 7, and acid blue 10.

9. A granule according to any preceding claim, wherein the granule forms part of a laundry detergent shading composition, wherein a unit dose provides alkalinity in the pH range 8 to 11 when it dissolves in an aqueous wash volume.

10. A granule according to claim 9, wherein the laundry detergent shading composition is in form a tablet.

## Patentansprüche

1. Granulat zur Verwendung bei der Herstellung einer basischen tönenden Waschmittel-Zusammensetzung, wobei d7as Granulat verbesserte Lagerungseigenschaften hat, umfassend:
einen Farbstoff, ausgewählt aus der Gruppe, bestehend aus Säurefarbstoffen, Direktfarbstoffen, basischen Farbstoffen, Lösungsmittelfarbstoffen, hydrolysierten Reaktivfarbstoffen, Reaktivfarbstoffen und Dispersionsfarbstoffen und einem Farbstoff vom Chromophor-Typ von Diarylmethan, Triarylmethan, Diazinen, Oxazinen oder Thiazinen aufweisend,
und eine Komponente, ausgewählt aus der Gruppe, bestehend aus einem Co-Granulierungsmittel, einem Bindemittel und einer Beschichtung,
**dadurch gekennzeichnet, dass** die Komponente eine saure Komponente ist, mit einer Pufferkapazität, bei der, wenn 1,00 g des Granulats in 50 ml entmineralisiertem Wasser unter Bereitstellung einer sauren Lösung gelöst ist, wenigstens 10 ml einer 0,01 M Lösung von Natriumhydroxid erforderlich sind, um den pH der sauren Lösung auf 9 zu bringen.

2. Granulat gemäß Anspruch 1, wobei der Farbstoff aus Säurefarbstoff und Direktfarbstoff ausgewählt ist.

3. Granulat gemäß Anspruch 1 oder 2, wobei der Farbstoff in Form von Vorgranulat ist, das den Farbstoff und ein neutrales wasserlösliches Material umfasst.

4. Granulat gemäß einem vorangehenden Anspruch, wobei die Säurekomponente ein wasserlösliches saures Polymer ist, das Polymer eine Wasserlöslichkeit von größer als 5 g/l bei 20 °C, ein Molekulargewicht von 1000 bis 250000 hat und wobei eine 1 %-ige Lösung des Polymers einen pH von kleiner als 7 hat.

5. Granulat gemäß Anspruch 4, wobei das wasserlösliche saure Polymer ein Polymer ist, das durch die Polymerisation einer ungesättigten Verbindung, die eine Carbonsäure enthält, gebildet wurde.

6. Granulat gemäß Anspruch 5, wobei das wasserlösliche saure Polymer ein Copolymer aus Acrylsäure und Maleinsäure ist.

7. Granulat gemäß einem der Ansprüche 1 bis 6, wobei der Farbstoff Säureviolett 15, 16, 17, 19, 21, 23, 24, 25, 38, 50, 72 und basisches Violett 1, 2, 3, 4, 5, 6, 7, 9, 13, 14, 15, 16, 17, 23, 27, 40, 43, 45 und 47 ist.

8. Granulat gemäß einem der Ansprüche 1 bis 6, wobei der Farbstoff ein Säurefarbstoff ist, der ausgewählt ist aus der Gruppe, bestehend aus: Säureviolett 17, Säureblau 3, Säureblau 9, Säureblau 7 und Säureblau 10.

9. Granulat gemäß einem vorangehenden Anspruch, wobei das Granulat einen Teil einer tönenden Waschmittel-Zusammensetzung bildet, wobei eine Einheitsdosis Alkalinität im pH-Bereich von 8 bis 11 liefert, wenn sie in einem wässrigen Waschvolumen gelöst wird.

10. Granulat gemäß Anspruch 9, wobei die tönende Waschmittel-Zusammensetzung in Form einer Tablette ist.

## Revendications

1. Granulé, pour une utilisation dans la préparation d'une composition de nuançage détergente pour la lessive basique, ledit granulé ayant des propriétés de stockage améliorées comprenant :
un colorant choisi dans le groupe constitué par les colorants acides, les colorants directs, les colorants basiques, les colorants à solvant, les colorants réactifs hydrolysés, les colorants réactifs et les colorants dispersés et comportant un chromophore de colorant de type diarylméthane, triarylméthane, diazines, oxazines, ou thiazines et, un constituant choisi dans le groupe constitué par : un co-agent de granulation, un liant et un enrobage,
**caractérisé en ce que** le constituant est un constituant acide, dans lequel le pouvoir tampon est tel que, quand on dissout 1,00 g des granulés dans 50 ml d'eau déminéralisée pour obtenir une solution acide, il faut au moins 10 ml d'une solution d'hydroxyde de sodium 0,01 M pour amener le pH de la solution acide à 9.

2. Granulé selon la revendication 1, dans lequel le colorant est choisi parmi : un colorant acide et un colorant direct.

3. Granulé selon la revendication 1 ou 2, dans lequel le colorant est dans la forme de pré-granulés comprenant le colorant et une substance neutre soluble dans l'eau.

4. Granulé selon l'une quelconque des revendications précédentes, dans lequel le constituant acide est un polymère acide soluble dans l'eau, ledit polymère ayant une solubilité dans l'eau supérieure à 5 g/l à 20°C, une masse moléculaire de 1 000 à 250 000, et dans lequel une solution à 1 % dudit polymère présente un pH inférieur à 7.

5. Granulé selon la revendication 4, dans lequel le polymère acide soluble dans l'eau est un polymère formé par polymérisation d'un composé insaturé contenant un acide carboxylique.

6. Granulé selon la revendication 5, dans lequel le polymère acide soluble dans l'eau est un copolymère d'acide acrylique et d'acide maléique.

7. Granulé selon l'une quelconque des revendications 1 à 6, dans lequel le colorant est le violet acide 15, 16, 17, 19, 21, 23, 24, 25, 38, 50, 72, et le violet basique 1, 2, 3, 4, 5, 6, 7, 9, 13, 14, 15, 16, 17, 23, 27, 40, 43, 45 et 47.

8. Granulé selon l'une quelconque des revendications 1 à 6, dans lequel le colorant est un colorant acide choisi dans le groupe constitué par : le violet acide 17, le bleu acide 3, le bleu acide 9, le bleu acide 7, et le bleu acide 10.

9. Granulé selon l'une quelconque des revendications précédentes, dans lequel le granulé fait partie d'une composition de nuançage détergente pour la lessive dans laquelle une dose unitaire permet d'obtenir une alcalinité sur le domaine de pH de 8 à 11 lorsqu'elle est dissoute dans un volume de lavage aqueux.

10. Granulé selon la revendication 9, dans lequel la composition de nuançage détergente pour la lessive est sous forme de comprimé.
